Europäisches Patentamt

(19) European Patent Office

Office européen des brevets

(11) Numéro de publication: **0 077 722**
**A1**

(12) # DEMANDE DE BREVET EUROPEEN

(21) Numéro de dépôt: 82401874.1

(22) Date de dépôt: 12.10.82

(51) Int. Cl.³: **G 01 K 1/16**
**G 01 J 5/04**

(30) Priorité: 14.10.81 FR 8119301

(43) Date de publication de la demande:
27.04.83 Bulletin 83/17

(84) Etats contractants désignés:
BE CH DE GB IT LI LU NL

(71) Demandeur: SOCIETE BOURGUIGNONNE DE
MECANIQUE
Clenay
F-21490 Ruffey Les Echirey(FR)

(72) Inventeur: Juras, Martin
7, rue Pierre Loti
F-21000 Dijon(FR)

(74) Mandataire: Derambure, Christian
BUGNION ASSOCIES SARL 116, boulevard Haussmann
F-75008 Paris(FR)

(54) Sonde thermique et application de celle-ci à une installation de chauffage, notamment par infra-rouge.

(57) L'invention concerne une sonde thermique.

Une sonde thermique permettant de saisir les valeurs de la température "résultante" ambiante est caractérisée par le fait qu'elle comporte un organe support (2) rigide, bon conducteur de la chaleur, un transducteur (3) associé rigidement au support (2), en contact thermique avec celui-ci, un câble électrique (4) associé électriquement audit transducteur (3) l'organe support (2) présentant extérieurement des qualités aussi proches que possible du corps noir, sa face externe (8) étant par exemple peinte en noir. Le transducteur (3) est placé sur la face interne (6) de l'organe support (2), opposé à celle (8) présentant les caractéristiques du corps noir.

L'invention est applicable à la mesure de la température "résultante" d'un local chauffé par infra-rouge.

EP 0 077 722 A1

Croydon Printing Company Ltd.

## Sonde thermique et application de celle-ci à une installation de chauffage, notamment par infra-rouge.

L'invention concerne une sonde thermique, plus particulièrement une sonde permettant de capter la température "résultante" d'un local chauffé, et son application à une installation de chauffage.

On connaît déjà de nombreuses variantes de sondes thermiques. En général, ces sondes sont capables de donner une information correspondant à la température environnante. Cependant, elles ne peuvent donner une information correspondant à la valeur réelle telle qu'elle est perçue par l'utilisateur. En effet, lorsqu'un local est chauffé à une température $t$, quand un certain rayonnement à infrarouge pénètre dans le local chauffé, les sondes actuelles ne peuvent pas donner une information sur l'énergie de tels rayonnements infra-rouge, réellement absorbée par l'utilisateur.

On connaît par exemple des thermomètres ou sondes à réponse rapide utiles pour prendre la température des patients. Une telle sonde est constituée par une thermistance placée dans une enceinte bimétallique, à savoir un boîtier dont la paroi mince est métallique et est renforcée par une couche d'un métal ayant une très grande résistance mécanique. Le métal intérieur a une conductibilité thermique supérieure, ainsi la chaleur est transmise par conduction très rapidement à travers le métal à la thermistance. Ces sondes utilisent donc le principe de transmission de chaleur par conduction. Elles sont utilisées pour prendre la température d'un corps vivant au contact de la sonde. Cependant, elles ne permettent pas de capter la température à distance ni de capter la température "résultante" à savoir la somme de l'énergie thermique transmise par convection par l'air ou l'atmosphère ambiante et par le rayonnement infra-rouge existant au point où la mesure est effectuée.

On connaît par ailleurs des dispositifs de mesure de température de patients qui comportent au lieu d'une thermistance un transistor monté sur une plaque, un élément chauffant étant disposé à proximité du transistor pour chauffer celui-ci dans le but d'effectuer un étalonnage du dispositif.

De tels dispositifs ne permettent pas de mesurer la température "résultante".

Il s'ensuit que les sondes connues ne sont pas parfaitement adaptées à une régulation de grande précision. Cela est tout particulièrement vrai dans le cas d'installations de chauffage à infra-rouge, telles qu'on les utilise notamment dans les centres d'élevage d'animaux.

La présente invention vise à remédier à ces inconvénients, et à cet effet elle propose une sonde permettant de capter la température "résultante" ambiante, la sonde comportant un organe support rigide, bon conducteur de la chaleur et un transducteur associé rigidement ou non au support et en contact ou non thermiquement avec lui, un câble électrique étant associé électriquement au transducteur. L'organe support présente extérieurement des qualités aussi proches que possible du corps noir, par exemple, il est peint en noir. Le transducteur est placé sur la face interne de l'organe support, opposée à celle présentant les caractéristiques du corps noir. Il peut aussi être situé à l'intérieur de la sonde sans être en contact avec l'organe support. Plus particulièrement, l'organe support est métallique donc bon conducteur de la chaleur, et se présente par exemple sous la forme d'un tube pseudo-cylindrique, notamment en aluminium.

La sonde thermique selon l'invention permet donc de repérer la température ambiante et éventuellement l'énergie du rayonnement infra-rouge, qui est émis par le dispositif de chauffage. Du fait que le rayonnement infra-rouge est absorbé par l'organe support présentant des qualités proches de celles du corps noir, les ondes infra-rouges frappant le corps noir sont alors absorbées par celui-ci et transformées en énergie calorifique puis transmises à travers la paroi métallique de l'organe support qui est bon conducteur de la chaleur. La température repérée par le transducteur est donc sensiblement la température "résultante", c'est-à-dire la somme de l'énergie thermique correspondant à la température régnant dans l'atmosphère dans laquelle est plongée la sonde et l'énergie du rayonnement infra-rouge frappant cette sonde.

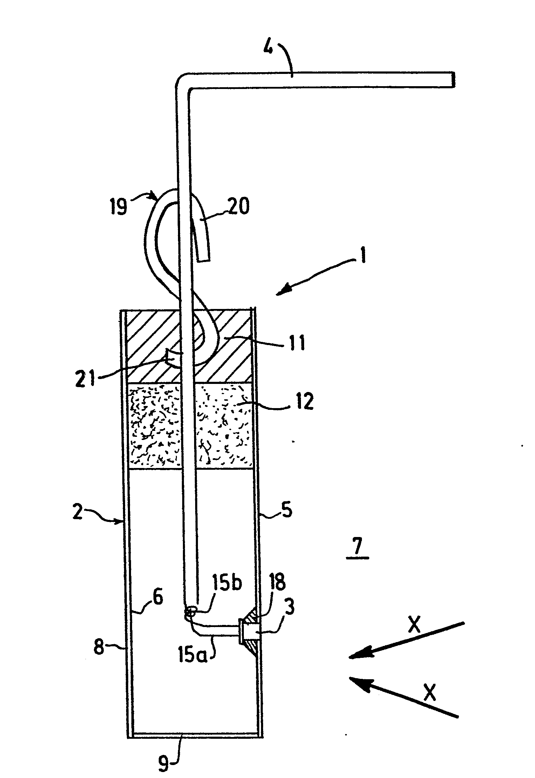

La description suivante en regard du dessin annexé à titre d'exemple non limitatif permettra de mieux comprendre comment la présente invention peut être mise en pratique.

La figure unique est une vue schématique d'une sonde thermique selon l'invention.

La sonde thermique 1 représentée sur le schéma comporte un organe support 2 rigide, un transducteur 3 associé rigidement à l'organe support 2 et en contact thermique avec lui. De préférence, le transducteur 3 est un transducteur permettant de transformer la température en un signal électrique. Plus particulièrement, ce signal électrique est un courant ou une tension. De préférence, on utilise un transducteur étant non perturbé et insensible aux parasites extérieurs et indépendant de la longueur du câble. Il permet une représentation fidèle de la température.

La sonde thermique 1 comporte en outre un câble électrique blindé 4 associé électriquement au transducteur 3.

L'organe support 2 présente extérieurement des qualités aussi proches que possible du corps noir afin d'absorber le mieux possible le rayonnement infra-rouge éventuel. Par exemple, cet organe support peut comporter une face externe 5 peinte en noir.

Le transducteur 3 est placé sur la face interne 6 de l'organe support 2, opposée à celle présentant les caractéristiques du corps noir. Cependant, dans une autre forme de réalisation non représentée, il peut être située à l'intérieur de la sonde sans être en contact avec l'organe support 2. Il peut aussi ne pas être rigidement associé au support 2.

Plus particulièrement, l'organe support 2 se présente sous la forme d'un tube, bon conducteur de la chaleur, par exemple métallique, notamment en aluminium. Ainsi, les rayonnements infra-rouges X émis à l'extérieur 7 du tube sont absorbés totalement par la face externe 5 de la paroi 8 qui est peinte en noir et ces rayonnements sont transmis à travers cette paroi 8, jusqu'à la face interne 6 de celle-ci, du fait que la matière constitutive du support 2 est une matière bonne conductrice de la chaleur, par exemple métallique. Le transducteur 3 étant placé sur la face interne 6 du tube 2, il saisit la somme de l'énergie thermique ambiante et de l'énergie émise par le rayonnement infra-rouge et captée par le tube et il transforme cette valeur en variables électriques. Plus particulièrement, il transforme la valeur de température "résultante" en variable d'intensité de courant.

Le tube 2 est plus particulièrement un tube pseudo cylindrique à section droite transversale circulaire. Il est fermé à son extrémité inférieure 9, de préférence par une pastille métallique qui est soudée ou collée. Le transducteur 3 est fixé sur la face latérale de l'organe support 2, dans une position écartée de l'extrémité 9. Il peut être fixé à l'intérieur du tube, sur la partie 9 fermant l'extrémité du tube. Le transducteur 3 est fixé sur la face interne 6 du tube 2 par une résine thermo-conductrice formant le joint 18.

L'extrémité 10 du tube 2 opposée à l'extrémité 9 est fermée par un bouchon 12, par exemple en polystyrène expansé. Ce bouchon 12 a pour fonction de maintenir le câble 4 coaxialement au tube pseudo-cylindrique 2.

La sonde thermique comporte en outre un organe d'accrochage permettant de la fixer à un support. Cet organe d'accrochage 19 est particulièrement un crochet en S dont une extrémité 20 recourbée est située à l'extérieur de l'organe support 2 et dont l'extrémité opposée 21 elle aussi recourbée est noyée dans une résine 11. Cette résine 11 est coulée directement sur le bouchon 12, ce bouchon 12 ayant pour fonction d'éviter des pertes de résine lors de sa coulée. La résine 11 maintient donc le crochet 19 et le câble 4 en position. Le câble 4 est un câble blindé dont le conducteur central 15a est relié au conducteur 3 et dont le conducteur hélicoïdal 15b est lui aussi relié au transducteur 3. Le câble 4 peut être relié au corps de sonde 2 par un dispositif de connexion débrochable situé notamment à l'extrémité du câble 4 qui est située dans le corps de sonde 2.

Le transducteur 3 est donc parfaitement isolé à l'intérieur de l'organe support 2 qui forme un tube étanche. Le transducteur 3 est placé dans la partie étanche formée par la paroi latérale 8 du tube, l'extrémité 9 fermée du tube et le bouchon 12.

La sonde selon l'invention permet donc de capter la température ambiante régnant à l'extérieur 7 de la sonde ainsi que le rayonnement X infra-rouge parvenant sur cette sonde. La sonde est utilisée notamment pour mesurer la chaleur perçue par des animaux ou des organismes vivants placés dans une enceinte chauffée par rayonnement infra-rouge. Lorsque le rayonnement infra-rouge vient frapper la sonde, la sonde saisit les valeurs de la température ambiante et l'énergie du rayonnement infra-rouge. Lorsque le rayonnement infra-rouge n'est pas émis, la sonde ne saisit que les valeurs de température ambiante.

Revendications de brevet.

1. Sonde thermique permettant de saisir les valeurs de la température "résultante" ambiante, caractérisée par le fait qu'elle comporte un organe support (2) rigide, bon conducteur de la chaleur, un transducteur (3), un câble électrique (4) associé électriquement audit transducteur (3), l'organe support (2) présentant extérieurement des qualités aussi proches que possible du corps noir, sa face externe (8) étant par exemple peinte en noir.

2. Sonde selon la revendication 1, caractérisée par le fait que le transducteur (3) est placé sur la face interne (6) de l'organe support (2), opposée à celle (8) présentant les caractéristiques du corps noir.

3. Sonde selon l'une quelconque des revendications 1 et 2, caractérisée par le fait que le transducteur (3) est associé rigidement au support (2), en contact thermique avec celui-ci.

4. Sonde selon l'une quelconque des revendications 1 et 2, caractérisée par le fait que le transducteur (3) n'est pas associé rigidement au support (2).

5. Sonde selon l'une quelconque des revendications 1, 2 et 4, caractérisé par le fait que le transducteur (3) est situé à l'intérieur de la sonde mais n'est pas en contact avec le support (2).

6. Sonde selon l'une quelconque des revendications 1 à 5, caractérisée par le fait que l'organe support (2) se présente sous la forme d'un tube pseudo-cylindrique, à section transversale droite circulaire, par exemple métallique notamment en aluminium.

7. Sonde selon l'une quelconque des revendications 1 à 6

2

caractérisée par le fait que l'organe support (2) est fermé à son extrémité (9) notamment par une pastille soudée ou collée, et, à son extrémité opposée (10), par un bouchon (12) supportant une résine (11) durcie.

8. Sonde selon l'une quelconque des revendications 1 à 7, caractérisé par le fait que le transducteur (3) est fixé à la face interne latérale (6) du tube 2) dans une position écartée de son extrémité fermée (9).

9. Sonde selon l'une quelconque des revendications 1 à 8, caractérisée par le fait que le transducteur (3) est fixé sur la partie fermant l'extrémité (9).

10. Sonde selon l'une quelconque des revendications 1 à 9, caractériséepar le fait qu'elle comporte un organe d'accrochage (19), par exemple un crochet en S.

11. Sonde selon l'une quelconque des revendications 1 à 10, caractérisée par le fait que le câble (4) est relié au corps de la sonde (2) par un dispositif de connection débrochable.

12. Application d'une sonde selon l'une quelconque des revendications 1 à 11, à un dispositif de chauffage, notamment du type infra-rouge.

Office européen
des brevets

**RAPPORT DE RECHERCHE EUROPEENNE**

EP 82 40 1874

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | G 01 K 1/16 |
| X | FR-A-2 078 668 (MEDITECH ENERGY AND ENVIRONMENTAL CORP.) * titre; page 5, ligne 22 à page 6, ligne 36; figures 1,2,3 * | 1-3,6-8 | G 01 J 5/04 |
| X | US-A-3 491 596 (J.M. DEAN) * colonne 3, ligne 23 à colonne 4, ligne 19; figures 1,2,3 * | 1-3,6,7,9 | |
| A | FR-A-2 389 109 (HONEYWELL INC.) * titre; page 2, ligne 5 à page 3, ligne 6; figures 1,2 * | 2,4-7 | |
| A | US-A-3 131 304 (N.E. HAGER) * colonne 1, lignes 34 à 63; colonne 2, lignes 43 à 58; colonne 2, ligne 72 à colonne 3, ligne 18; figures * | 1,4-6,9 | **DOMAINES TECHNIQUES RECHERCHES (Int. Cl. ³)** |
| A | US-A-2 836 695 (M.L. JOHNSON) * figures 1,2; colonne 4, ligne 19 à colonne 5, ligne 44; colonne 6, lignes 9 à 68 * | 1,10 | G 01 K 1 G 01 K 17 G 01 J 5 |
| | ----- | | |

Le présent rapport de recherche a été établi pour toutes les revendications

| Lieu de la recherche | Date d'achèvement de la recherche | Examinateur |
|---|---|---|
| LA HAYE | 17-01-1983 | VISSER F.P.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

\& : membre de la même famille, document correspondant

OEB Form 1503. 03.82